(19) Europäisches Patentamt
European Patent Office
Office européen des brevets

(11) **EP 3 304 732 B1**

(12) **FASCICULE DE BREVET EUROPEEN**

(45) Date de publication et mention
de la délivrance du brevet:
**08.04.2020 Bulletin 2020/15**

(21) Numéro de dépôt: **16726071.0**

(22) Date de dépôt: **25.05.2016**

(51) Int Cl.:
***H02S 50/15*** (2014.01)

(86) Numéro de dépôt international:
**PCT/EP2016/061838**

(87) Numéro de publication internationale:
**WO 2016/189052 (01.12.2016 Gazette 2016/48)**

(54) **PROCÉDÉ D'ESTIMATION D'UNE PERTE DE PRODUCTION ÉNÉRGETIQUE D'UN MODULE PHOTOVOLTAÏQUE**

VERFAHREN ZUR SCHÄTZUNG EINES VERLUSTS DER ENERGIEERZEUGUNG EINES PHOTOVOLTAISCHEN MODULS

METHOD FOR ESTIMATING A LOSS OF ENERGY PRODUCTION OF A PHOTOVOLTAIC MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.05.2015 FR 1554676**

(43) Date de publication de la demande:
**11.04.2018 Bulletin 2018/15**

(73) Titulaire: **Commissariat à l'Énergie Atomique et aux Énergies Alternatives 75015 Paris (FR)**

(72) Inventeurs:
• **HA, Duy Long**
  **73000 Chambery le Vieux (FR)**
• **TSANAKAS, Ioannis**
  **73100 Aix-les-Bains (FR)**

(74) Mandataire: **Novaimo
Europa 1
362, avenue Marie Curie
Archamps Technopole
74166 Saint Julien-en-Genevois Cedex (FR)**

(56) Documents cités:
**US-A1- 2005 252 545    US-A1- 2009 238 444
US-A1- 2013 226 480**

**Description**

La présente invention concerne un procédé d'évaluation d'une perte de production énergétique d'un module photovoltaïque d'une centrale photovoltaïque, et système d'estimation correspondant.

Une centrale solaire photovoltaïque est un ensemble comportant une pluralité de modules solaires photovoltaïques (PV) reliés entre eux et destinés à produire de l'électricité. Elle s'étend sur une grande superficie, pouvant atteindre plusieurs km². Le document US2009/0238444A décrit un procédé de test d'un module photovoltaïque.

Les modules, constitués de cellules photovoltaïques, sont susceptibles de présenter des défauts qui forment, en fonctionnement, des « hot spots » ou zones chaudes. Ces défauts ont potentiellement un impact sur la productivité de la centrale. Il est donc important de pouvoir détecter, localiser et évaluer ces défauts, de manière à décider s'il est pertinent d'intervenir au niveau du module défectueux pour le réparer. Généralement, un opérateur de maintenance équipé d'une caméra thermique passe successivement devant les différents modules PV pour réaliser des prises de vue thermique. Les données thermiques ainsi collectées sont ensuite analysées afin d'y détecter une zone potentiellement défectueuse. En variante, l'opérateur peut débrancher chaque module à contrôler et déterminer la caractéristique courant-tension, ou I-V, du module à l'aide d'un traceur IV. Si une ou plusieurs zones potentiellement défectueuses sont détectées, une intervention de réparation est déclenchée. Celle-ci nécessite généralement un arrêt de fonctionnement temporaire de la centrale PV, ce qui représente une perte de production non négligeable, et des travaux de manutention. En outre, l'accès au module peut s'avérer délicat.

Compte tenu de la superficie d'une centrale PV, une telle opération de maintenance s'avère très coûteuse en temps et en perte de production. En outre, elle manque très souvent de fiabilité. En effet, les zones défectueuses potentielles détectés peuvent s'avérer ne pas être défectueuses en réalité. Il en résulte que la perte de production causée par une intervention de réparation peut a posteriori s'avérer injustifiée. Cela peut dissuader l'exploitant d'une centrale PV de réaliser une telle opération de maintenance.

Avant de déclencher une intervention de réparation sur un module photovoltaïque défectueux au sein d'une centrale photovoltaïque, il peut être pertinent d'évaluer, ou de quantifier, au préalable la perte de production énergétique induite par le ou les défauts de ce module.

A cet effet, l'invention concerne un procédé d'estimation d'une perte de production énergétique d'un module photovoltaïque défectueux appartenant à une centrale photovoltaïque, comprenant les étapes de :

- acquisition d'une image thermique du module photovoltaïque défectueux en fonctionnement ;
- découpage de l'image thermique acquise en différentes zones de température et détermination des températures respectives relatives aux différentes zones à partir de l'image thermique ;
- obtention d'une température de référence d'un module photovoltaïque de référence ;
- détection, parmi lesdites zones de température, d'au moins une zone chaude dont la température est supérieure à la température de référence avec un écart de température supérieur ou égal à une valeur minimale prédéfinie ;
- calcul d'une estimation de la perte de production énergétique du module à partir de l'écart de température entre la température de la zone chaude et la température de référence, de la surface de la zone chaude et d'un coefficient d'échange thermique du module.

Grâce à l'invention, on estime la perte de productivité d'un module photovoltaïque défectueux de façon simple, par thermographie, à partir d'une image thermique de ce module en fonctionnement. Il n'est donc pas nécessaire d'interrompre momentanément le fonctionnement du module photovoltaïque pour le tester. L'estimation peut être réalisée sur un module photovoltaïque opérationnel d'une centrale photovoltaïque en cours de fonctionnement.

Avantageusement, on calcule une estimation de la perte de production énergétique $\Delta P_{ij}$ relative à la zone chaude $Z_{ij}$ du module photovoltaïque défectueux $M_i$ par la relation suivante :

$$\Delta P_{ij} = U_{pv}.S_{ij}.\left(T_{ij} - T_{ref}\right)$$

où :

- $U_{pv}$ représente un coefficient d'échange thermique du module $M_i$ ;
- $S_{ij}$ représente la surface de la zone chaude $Z_{ij}$ ;
- $T_{ij}$ représente la température de la zone chaude $Z_{ij}$ ;
- $T_{ref}$ représente ladite température de référence.

Avantageusement encore, dans le cas où le module photovoltaïque défectueux comprend plusieurs zones de température chaudes, on cumule les pertes estimées de production énergétique relatives aux différentes zones chaudes.

Dans un mode de réalisation particulier, ledit module photovoltaïque défectueux appartenant à une centrale photovoltaïque comportant une pluralité de modules photovoltaïques, la température de référence est relative à un module non défectueux en fonctionnement de la centrale.

Avantageusement, chacune des zones de température de l'image thermique acquise est caractérisée par une température propre qui est uniforme ou quasi-uniforme sur toute la zone, deux zones de température adjacentes présentant entre elles un écart de température supérieur à un seuil prédéfini.

Avantageusement encore, il comprend une étape de détermination de la surface de la zone chaude, à partir de l'image thermique dudit module.

Dans un mode de réalisation particulier, il comprend une étape préalable de détermination du coefficient d'échange thermique du module photovoltaïque défectueux comprenant les sous-étapes suivantes, mises en œuvre sur un module photovoltaïque de référence en fonctionnement :

- mesure de la puissance du flux lumineux irradiant le module de référence ;
- mesure de la puissance énergétique délivrée en sortie du module photovoltaïque de référence irradié ;
- mesure de la température ambiante ;
- mesure de la température du module photovoltaïque de référence ;
- détermination du coefficient d'échange thermique du module photovoltaïque de référence par la relation suivante :

$$U_{pv} = \frac{G.A - P}{A.(T - T_{\propto})}$$

où :

- $U_{pv}$ représente le coefficient d'échange thermique du module photovoltaïque de référence ;
- $G$ représente la puissance du flux lumineux irradiant le module photovoltaïque de référence ;
- $A$ représente la surface du module photovoltaïque de référence ;
- $P$ représente la puissance énergétique délivrée par le module photovoltaïque de référence ;
- $T$ représente la température du module photovoltaïque de référence ;
- $T_{\propto}$ représente la température ambiante.

Avantageusement, durant l'acquisition de l'image thermique du module photovoltaïque défectueux, la centrale photovoltaïque est en cours de fonctionnement.

L'invention concerne aussi un système d'estimation d'une perte de production énergétique d'un module photovoltaïque défectueux d'une centrale photovoltaïque, comprenant :

- un dispositif d'acquisition d'une image thermique du module photovoltaïque en fonctionnement ;
- un calculateur comportant un module de découpage de l'image thermique acquise en différentes zones de température et de détermination des températures respectives relatives aux différentes zones à partir de l'image thermique, un module d'obtention d'une température de référence d'un module photovoltaïque non défectueux, un module de détection, parmi lesdites zones de température, d'au moins une zone chaude dont la température est supérieure à la température de référence avec un écart de température supérieur ou égal à une valeur minimale prédéfinie, un module de calcul d'une estimation de la perte de production énergétique du module à partir de l'écart de température entre la température de la zone chaude et la température de référence, de la surface de la zone chaude et d'un coefficient d'échange thermique du module.

Avantageusement, le module de calcul est agencé pour calculer une estimation de la perte de production énergétique $\Delta P_{ij}$ relative à la zone chaude $Z_{ij}$ du module $M_i$ par la relation suivante :

$$\Delta P_{ij} = U_{pv}.S_{ij}.\left(T_{ij} - T_{ref}\right)$$

où :

- $U_{pv}$ représente un coefficient d'échange thermique du module $M_i$ ;
- $S_{ij}$ représente la surface de la zone chaude $Z_{ij}$ ;

- $T_{ij}$ représente la température de la zone chaude $Z_{ij}$ ;
- $T_{ref}$ représente ladite température de référence.

Avantageusement encore, le module de découpage est adapté pour décomposer l'image thermique du module photovoltaïque en différentes zones de température caractérisées chacune par une température propre qui est uniforme ou quasi-uniforme sur toute la zone, deux zones thermiques adjacentes présentant entre elles un écart de température supérieur à un seuil prédéfini.

L'invention sera mieux comprise à l'aide de la description suivante d'un mode de réalisation particulier du procédé et du système d'estimation d'une perte de production énergétique d'un module photovoltaïque d'une centrale photovoltaïque, en référence aux dessins annexés sur lesquels :

- Les figures 1A et 1B représentent un organigramme des étapes du procédé selon un mode de réalisation particulier de l'invention ;
- La figure 2 représente un schéma bloc fonctionnel d'un système d'estimation apte à mettre en œuvre le procédé des figures 1A et 1B, selon une forme de réalisation particulière de l'invention ;
- Les figures 3, 4 et 5 représentent des images thermiques de modules photovoltaïques d'une centrale photovoltaïque.

Le système 1 de l'invention est destiné à estimer la perte de production ou de puissance énergétique d'un module photovoltaïque défectueux en fonctionnement. Le module photovoltaïque défectueux appartient ici à une centrale photovoltaïque comportant un ensemble de modules photovoltaïques $M_i$ (i= 1, 2 , ...). L'estimation de la perte de puissance peut être réalisée lorsque la centrale photovoltaïque est en cours de fonctionnement. Chaque module $M_i$ comprend un nombre X de cellules photovoltaïques et présente une surface A.

Par les termes « en fonctionnement » ou « en cours de fonctionnement », on entend que le module photovoltaïque ou la centrale photovoltaïque est en cours de production d'énergie électrique par conversion d'énergie lumineuse incidente. De préférence, ceci exclut toute alimentation électrique d'un module photovoltaïque pour produire un échauffement de celui-ci.

Le système d'estimation 1 comprend les éléments suivants :

- un dispositif 2 d'acquisition d'images thermiques ;
- un calculateur 3 ;
- un capteur thermique 4;
- un capteur d'irradiance 5 (ou de mesure de puissance d'un flux lumineux).

Le dispositif 2 d'acquisition d'images thermiques est par exemple une caméra thermique. Il est apte à prendre des images thermiques d'un module photovoltaïque. Il peut être porté par un utilisateur destiné à passer devant les modules photovoltaïques de la centrale photovoltaïque et à prendre des images thermiques d'un ou plusieurs modules photovoltaïques, autrement dit à acquérir des données thermiques ou thermographiques du ou des modules photovoltaïques. En variante, le dispositif d'acquisition thermographique 2 peut être porté par un drone destiné à survoler les modules de la centrale.

Le capteur thermique 4 est destiné à mesurer la température ambiante extérieure.

Le capteur d'irradiance 5 est destiné à mesurer l'irradiance incidente sur un module photovoltaïque, autrement dit la puissance du flux lumineux reçu par un module photovoltaïque.

Le calculateur 3 est destiné à estimer la perte de production énergétique d'un module photovoltaïque à partir d'une image thermique du module en fonctionnement. Il comprend différents modules fonctionnels qui seront décrits ultérieurement.

La caméra thermique 2, le capteur thermique 4 et le capteur d'irradiance 5 sont ici connectés au calculateur 3 et destinés à lui transmettre des données thermographiques, des données thermiques et des données d'irradiance mesurées. Les différents éléments 2 à 5 peuvent être intégrés dans un même équipement physique. En variante, les éléments 2 à 5 peuvent être, en tout ou partie, physiquement séparés. Par exemple, le calculateur 3 pourrait être distant, c'est-à-dire séparé physiquement de la caméra thermique 2 et des capteurs 4 et 5. Le calculateur 3 peut notamment être intégré dans un ordinateur portable ou fixe destiné à être utilisé par un opérateur. Dans ce cas, la caméra 2, le capteur thermique 4 et/ou le capteur d'irradiance 5 peuvent être connectés au calculateur 3 par liaison radio ou filaire. De façon alternative, la température mesurée par le capteur 4 et/ou l'irradiance mesurée par le capteur 5 pourraient être fournies au calculateur 3 par un utilisateur au moyen d'une interface homme-machine.

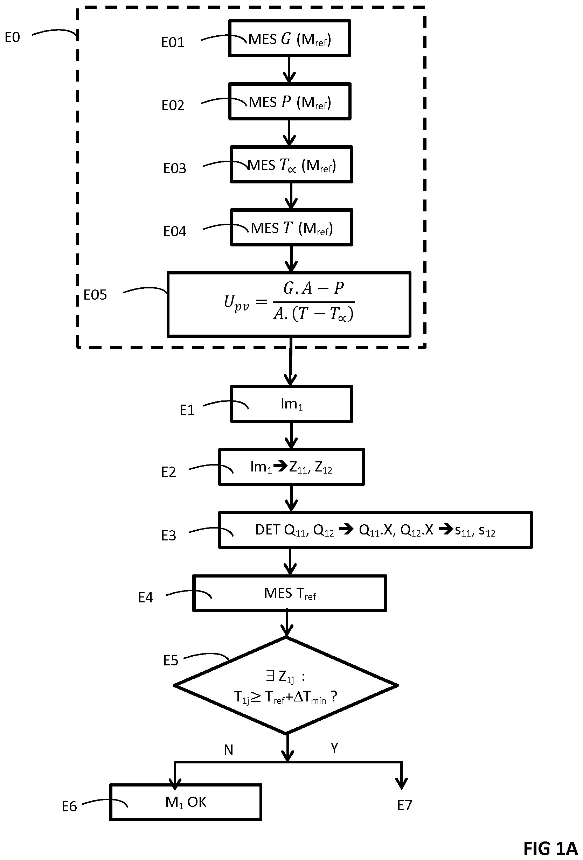

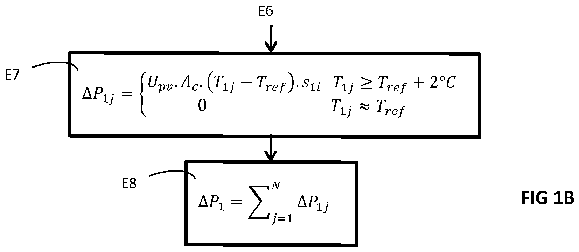

On va maintenant décrire en référence à la figure 1 un mode de réalisation particulier du procédé d'estimation d'une perte de production ou de puissance énergétique d'un module photovoltaïque défectueux de la centrale photovoltaïque. Le procédé est ici mis en œuvre pendant le fonctionnement de la centrale photovoltaïque.

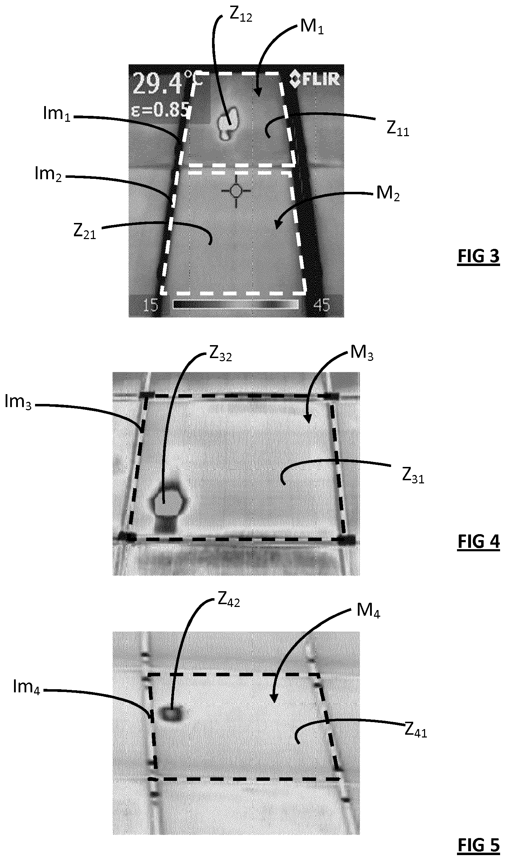

Prenons, à titre d'exemple illustratif, l'image thermique de la figure 3. Elle contient les images thermiques $Im_1$

et $Im_2$ de deux modules photovoltaïques référencés $M_1$ (en haut de de la figure 3) et $M_2$ (en bas de de la figure 3). Le module $M_1$ est défectueux : il comporte un défaut thermique lié à des fissures dans le matériau semi-conducteur. Le module $M_2$ est sans défaut thermique et fonctionne correctement.

Le procédé de l'invention permet d'estimer la perte de production énergétique ou perte de puissance en sortie du module $M_1$, cette perte étant causée par le défaut thermique.

Le procédé comprend une étape préalable de configuration E0 visant à déterminer un coefficient d'échange thermique $U_{pv}$ du module photovoltaïque $M_1$. Cette étape de configuration E0 est mise en œuvre sur un module photovoltaïque de référence $M_{ref}$. Un « module photovoltaïque de référence » est un module photovoltaïque analogue au module à évaluer $M_1$ (c'est-à-dire de même type et/ou ayant les mêmes caractéristiques techniques) mais non défectueux, c'est-à-dire sans défaut thermique. Le module photovoltaïque de référence est avantageusement un module de la centrale photovoltaïque, par exemple situé dans le voisinage du module à évaluer. Dans l'exemple de réalisation décrit ici, ce module photovoltaïque de référence est le module $M_2$.

L'étape de configuration E0 comprend une première sous-étape de mesure E01, lors de laquelle le capteur 5 mesure l'irradiance incidente G reçue par le module photovoltaïque $M_{ref}$, dans le plan du module $M_{ref}$, autrement dit de la puissance du flux lumineux reçu par le module $M_{ref}$. La grandeur G mesurée est exprimée en $W/m^2$.

L'étape de configuration E0 comprend une deuxième sous-étape de mesure E02, lors de laquelle la puissance électrique P délivrée en sortie du module photovoltaïque de référence $M_{ref}$ est mesurée pendant que le module $M_{ref}$ est irradié. La puissance peut être déterminée par une mesure de la tension et du courant en sortie du module $M_{ref}$ à l'aide d'un traceur IV.

L'étape de configuration E0 comprend une troisième sous-étape de mesure E03 lors de laquelle le capteur thermique 4 mesure la température ambiante $T_\infty$ dans l'environnement extérieur du module photovoltaïque de référence $M_{ref}$.

L'étape de configuration E0 comprend une quatrième sous-étape de mesure E04 lors de laquelle la température $T(M_{ref})$ du module de référence est mesurée. La température $T(M_{ref})$ correspond à la température moyenne du module de référence $M_{ref}$. Cette mesure peut être réalisée à partir d'une image thermique du module $M_{ref}$ prise par la caméra thermique 2 ou par un capteur thermique apte à mesurer la température moyenne du module de référence $M_{ref}$. Le capteur thermique peut être un capteur comportant une ou plusieurs sondes thermiques de contact et être collé par exemple à l'arrière du module, ou un capteur sans contact, qu'un opérateur peut par exemple placer à proximité du module $M_{ref}$ pour mesure sa température.

L'étape de configuration E0 comprend enfin une étape E05 de calcul du coefficient d'échange thermique $U_{pv}$ du module photovoltaïque $M_{ref}$ ici par la relation suivante :

$$U_{pv} = \frac{G.A - P}{A.(T - T_\infty)} \qquad (0)$$

où :

- $G$, exprimée en $W.m^{-2}$, représente la puissance lumineuse incidente, ou irradiance incidente, sur le module photovoltaïque de référence $M_{ref}$ ;
- $A$, exprimée en $m^2$, représente la surface du module photovoltaïque de référence $M_{ref}$ ;
- $P$, exprimée en W, représente la puissance énergétique (ici électrique) délivrée en sortie par le module photovoltaïque de référence $M_{ref}$ ;
- $T$ représente la température du module photovoltaïque de référence $M_{ref}$ ;
- $T_\infty$ représente la température ambiante dans l'environnement du module de référence $M_{ref}$.

On pourrait toutefois utiliser d'autres méthodes, connues de l'homme du métier, pour estimer $U_{pv}$.

La relation (0) découle de l'équation suivante (1) qui traduit une condition d'équilibre énergétique du module photovoltaïque :

$$G.A = P + U_{pv} \times A \times (T - T_\infty) \qquad (1)$$

Le coefficient d'échange thermique du module photovoltaïque $M_1$ est égal ou sensiblement égal au coefficient d'échange thermique $U_{pv}$ déterminé pour le module de référence $M_{ref}$. De manière générale, le coefficient d'échange thermique $U_{pv}$ déterminé à partir du module de référence $M_{ref}$ est applicable à tous les modules photovoltaïques de même type, notamment ceux appartenant à la centrale photovoltaïque.

Cette étape de configuration E0 est toutefois optionnelle. On pourrait en effet envisager que le coefficient d'échange thermique du module $M_1$ soit connu, par exemple fourni par le fabricant.

Le coefficient d'échange thermique $U_{pv}$ du module $M_1$ étant connu, le procédé comprend une étape E1 d'acquisition d'une image thermique $Im_1$ du module photovoltaïque $M_1$. Cette image thermique $Im_1$ est prise par la caméra thermique 2. L'image $Im_1$ du module $M_1$ peut être constituée par une partie d'une image acquise par la caméra thermique 2, comme représenté sur la figure 3.

L'acquisition d'image est réalisée lorsque les conditions de mesure radiométrique sont satisfaisantes, avec par exemple G supérieur ou égal à $600 W/m^2$ et un vent stable de vitesse inférieure ou égale à 15km/h. De façon plus détaillée, les conditions suivantes (basées notamment sur l'expérience et sur la norme IEC 60904-14 en cours de développement), sont considérées comme préférables pour obtenir une précision radiométrique (ou thermographique) optimale :

- étalonnage de la caméra thermique avec cette valeur avec le facteur d'émissivité $\varepsilon$ de la surface-cible déterminé. Par exemple, des valeurs typiques de $\varepsilon$ sont proches de 0,85 (soit 85%) pour le verre trempé (de couverture d'un module PV), et proches de 0,90 (soit 90%) pour le matériau de feuille arrière (par exemple Tedlar®) ;
- conditions d'ensoleillement stables, avec de préférence une irradiance minimale $G_{min} = 600 \, W / m^2$ dans le plan du module photovoltaïque) ;
- conditions de vent stables, avec de préférence une vitesse maximale du vent égale à 4 Bf, soit environ 20 à 30 km/h ;
- de préférence, une couverture nuageuse nulle ou très faible, de préférence, une couverture nuageuse maximale de 2 octas ;
- calibrage ou correction de la caméra thermique avec une valeur de compensation d'ambiante (ACV), fonction de la distance de la surface-cible, de l'humidité relative (RH%) et de la température ambiante uniforme ;
- réglage de l'angle $\vartheta_{opt}$ entre la lentille de la caméra thermique et le plan du module (surface-cible) aussi près possible de 90° (vertical au module) ou, au moins, ne pas être inférieur à 50°. Le choix de l'angle $\vartheta_{opt}$ doit être également adapté de sorte à éviter les reflets indésirables de l'appareil photo ou de l'opérateur de la surface-cible qui provoquent l'auto-détection (phénomène "Narcisse") ;
- distance maximale de la surface-cible permettant d'assurer une résolution minimale d'au moins $5 \times 5$ pixels par cellule pour l'image thermique. La distance minimale de la surface-cible est de préférence supérieure ou égale à 1 m.
- conditions stables de la charge en ce qui concerne le fonctionnement des modules photovoltaïques inspectés. L'opération est de préférence réalisée au point de puissance maximale et au moins 20 minutes après un incident précédent (ombre, nuage, anomalie de charge, etc.).

La caméra thermique 2 peut être portée par un opérateur qui se positionne devant le module $M_1$ ou par un drone survolant le module $M_1$.

L'étape E1 est suivie d'une étape E2 de découpage ou de décomposition de l'image thermique $Im_1$ du module photovoltaïque $M_1$ en un nombre N de zone(s) $Z_{1j}$, avec $1 \leq j \in [1,...,N]$. Ici, par le terme « découpage », on entend donc un découpage virtuel ou un maillage. L'assemblage des N zones $Z_{1j}$ forme l'image thermique initiale $Im_1$. L'étape de découpage E2 est réalisée par traitement d'image. Elle est mise en œuvre par le calculateur 3. Les zones découpées sont ici des zones de température. Chaque zone de température est caractérisée par une température propre qui est uniforme ou quasi-uniforme sur toute la zone, deux zones thermiques adjacentes ou contiguës présentant entre elles un écart de température supérieur à un seuil prédéfini $\Delta T_{seuil}$. Ce seuil $\Delta T_{seuil}$ est par exemple égal à 10°C. Par « quasi-uniforme », on entend signifier que la température dans la zone peut légèrement varier entre deux points situés dans la zone, l'écart de température entre ces deux points restant inférieur au seuil $\Delta T_{seuil}$ (ici de 10°C). Lors de l'étape de découpage E2, le calculateur 3 découpe ou décompose l'image thermique acquise $Im_1$ du module $M_1$ en un nombre N de zones de température $Z_{1j}$, avec $j \in [1,...,N]$, distinctes (sans chevauchement entre zones), et détermine la température $T_{1j}$ de chaque zone $Z_{1j}$ à partir des données de l'image thermique acquise $Im_1$.

Dans l'exemple de réalisation de la figure 3, l'image $Im_1$ du module $M_1$ comprend deux zones de température $Z_{11}$ et $Z_{12}$. La zone $Z_{11}$ correspond à une zone sans défaut thermique et présente une température uniforme ou quasi-uniforme $T_{11}$ ici égale à 30°C. La zone de température $Z_{12}$ correspond à une zone chaude ayant une température uniforme ou quasi-uniforme $T_{12}$ ici égale à 54°C. Cette zone chaude $Z_{12}$ correspond en l'espèce à un défaut constitué par des fissures au sein du matériau semi-conducteur.

Le procédé comprend ensuite une étape E3 de détermination des surfaces respectives des zones de température. Dans le mode de réalisation décrit, le calculateur 3 détermine la proportion de surface $Q_{11}$ et $Q_{12}$ de chaque zone de température $Z_{11}$ et $Z_{12}$ par rapport à la surface totale du module $M_1$, autrement dit le taux d'occupation de chaque zone $Z_{11}$ et $Z_{12}$ dans l'image totale $Im_1$. Cette étape E3 est également réalisée par traitement d'image à partir des données d'image $Im_1$ du module $M_1$. Ensuite, le calculateur 3 calcule ici la surface $s_{1j}$ de chaque zone thermique $Z_{1j}$, exprimée en nombre de cellules. Le calcul est effectué en multipliant le taux d'occupation surfacique de la zone $Q_{1j}$ par le nombre total X de cellules du module $M_1$. Dans l'exemple décrit ici X est égal à 54 cellules. On obtient ainsi la

surface $s_{11}$ et $s_{12}$ de chaque zone exprimée en nombre de cellules. Dans l'exemple de la figure 3, pour le module $M_1$, la surface $s_{11}$ de la zone $Z_{11}$ est de 51,84 cellules et la surface $s_{12}$ de la zone $Z_{12}$ est de 2,16 cellules. En variante, les surfaces des zones thermiques pourraient être exprimées en une autre unité de mesure, par exemple en m$^2$.

Le procédé comprend également une étape E4 d'obtention d'une température de référence $T_{ref}$ d'un module photovoltaïque de référence (non défectueux) en fonctionnement. En l'espèce, la température de référence $T_{ref}$ est la température du module $M_2$ en fonctionnement. A partir de l'image thermique du module $M_2$, le calculateur 3 détermine la température moyenne du module $M_2$, ici égale à 30°C. En variante, la température de référence $T_{ref}$ pourrait être préenregistrée dans une mémoire, par un utilisateur ou par le calculateur 3, ou mesurée directement par un capteur thermique (avec ou sans contact).

Le procédé comprend ensuite une étape de test E5 visant à détecter si le module $M_1$ contient au moins une zone chaude $Z_{1j}$ dont la température est supérieure à la température de référence avec un écart de température supérieur ou égal à une valeur minimale prédéfinie $\Delta T_{min}$. Lors du test E5, il est déterminé si le module photovoltaïque évalué $M_1$ contient au moins une zone $Z_{1j}$ contenant au moins une cellule dont la température $T_{1j}$ est supérieure à la température de référence $T_{ref}$, avec un écart de température $\Delta T$ supérieur ou égal à la valeur minimale $\Delta T_{min}$ ici égale à 2°C. En d'autres termes, on vérifie si l'une au moins des zones de température déterminées a une surface supérieure ou égale à 1 cellule et présente une température supérieure à la température de référence $T_{ref}$ avec un écart de température supérieur ou égal à $\Delta T_{min}$ (ici d'au moins 2°C).

En cas de test E5 positif ou vérifié (branche Y sur la figure 1A), il est déterminé que le module photovoltaïque considéré (ici $M_1$) est un module défectueux et qu'il convient de quantifier la perte de puissance ou de production énergétique de ce module défectueux induite par le défaut thermique détecté. Dans l'exemple décrit, le test E5 est positif car le module $M_1$ contient la zone $Z_{12}$ possédant 2,16 cellules et ayant une température égale à 54°C. Le procédé exécute alors les étapes E7 et E8.

Lors de l'étape E7, on évalue les pertes de puissance ou de production énergétique relatives respectivement aux zones de température $Z_{1j}$ du module $M_1$, comme décrit ci-après.

Si la température $T_{1j}$ de la zone $Z_{1j}$ est supérieure à la température de référence $T_{ref}$ avec un écart de température supérieur ou égal à la valeur minimale $\Delta T_{min}$ ici égale à 2°C, alors la perte de puissance est évaluée par la relation suivante énergétique $\Delta P_{1j}$, relative à la zone d'indice j du module $M_1$ par la relation suivante :

$$\Delta P_{1j} = U_{pv}.A_c.\left(T_{1j} - T_{ref}\right).s_{1j} \qquad (2)$$

où :

- $U_{pv}$ représente le coefficient d'échange thermique du module $M_1$, exprimé en W.°C$^{-1}$.m$^{-2}$ ;
- $s_{1j}$ représente la surface de la zone $Z_{1j}$ d'indice j du module $M_1$ exprimée en nombre de cellules ;
- $T_{1j}$ représente la température de la zone $Z_{1j}$ d'indice j du module $M_1$;
- $T_{ref}$ représente ladite température de référence, ici égale à 30°C ;
- $A_c$ représente la surface d'une cellule, exprimée en m$^2$.

Notons que la relation (2) est équivalente à la relation (2') :

$$\Delta P_{1j} = U_{pv}.\left(T_{1j} - T_{ref}\right).S_{1j} \qquad (2')$$

où $S_{ij} = A_c.s_{1j}$ représente la surface de la zone $Z_{1j}$ exprimée en m$^2$.

L'équation (2) est obtenue à partir de l'équation d'équilibre énergétique (1). Il résulte en effet de cette équation (1) que la puissance électrique $P_c$ délivrée par une cellule photovoltaïque est donnée par la relation suivante :

$$P_c = G.A_c - U_{pv} \times A_c \times (T_c - T_\propto) \qquad (3)$$

où :

- $G$ représente l'irradiance incidente sur la cellule, exprimée en W.m$^{-2}$ ;
- $A_c$ représente la surface d'une cellule, exprimée en m$^2$ ;
- $U_{pv}$ représente le coefficient d'échange thermique du module photovoltaïque auquel appartient la cellule, exprimé en W.°C$^{-1}$.m$^{-2}$;

- $T_c$ représente la température de la cellule, exprimée en °C ;
- $T_\infty$ représente la température ambiante dans l'environnement extérieur de la cellule, exprimée en °C.

A partir de l'équation (3), on peut exprimer la perte $\Delta P_c$ de puissance électrique ou de production énergétique entre une cellule de référence (non défectueuse) et une cellule défectueuse d'indice k par la relation suivante :

$$\Delta P_c = G_1.A_c - U_{pv} \times A_c \times \left(T_{ref} - T_{\infty 1}\right) - G_2.A_c + U_{pv} \times A_c \times \left(T_k - T_{\infty 2}\right) \quad (4)$$

où :

- $G_1$ représente l'irradiance incidente sur la cellule de référence, exprimée en W.m$^{-2}$ ;
- $T_{ref}$ et $T_{\infty 1}$ représente respectivement la température de la cellule de référence et la température ambiante dans l'environnement de la cellule de référence ;
- $G_2$ représente l'irradiance incidente sur la cellule défectueuse j, exprimée en W.m$^{-2}$ ;
- $T_k$ et $T_{\infty 2}$ représentent respectivement la température de la cellule défectueuse d'indice k et la température ambiante dans l'environnement de la cellule défectueuse k.

Si les images thermiques respectives de la cellule défectueuse k et de la cellule de référence sont obtenues au même moment, ou à peu de temps d'intervalle, il est supposé que $G_1 = G_2$ et $T_{\infty 1} = T_{\infty 2}$ et l'équation (4) peut être simplifiée selon la relation suivante :

$$\Delta P_c = U_{pv} \times A_c \times \left(T_k - T_{ref}\right) \quad (5)$$

L'équation (5) permet d'obtenir l'équation (2) donnant la perte de puissance d'une zone de température contenant au moins une cellule.

Si la température $T_{1j}$ de la zone $Z_{1j}$ est égale ou sensiblement égale à la température de référence $T_{ref}$, alors la perte de puissance est évaluée à zéro. Par « sensiblement égale », on entend ici signifier que l'écart de température entre la température de la zone considérée et la température de référence $T_{ref}$ est inférieur à la valeur minimale $\Delta T_{min}$, ici égal à 2°C.

Dans l'exemple décrit ici, lors de l'étape E7, on détermine ainsi :

- la perte de puissance $\Delta P_{12}$ relative à la zone chaude $Z_{12}$ par la relation $\Delta P_{12} = U_{pv} A_c. (T_{12} - T_{ref}).s_{12}$ ;
- la perte de puissance relative à la zone $Z_{11}$ par la relation $\Delta P_{11} = 0$.

Lors d'une étape suivante E8, on détermine la perte de puissance ou de production énergétique $\Delta P_1$ du module photovoltaïque $M_1$, correspondant à la somme des pertes de puissance relatives aux N différentes zones de température $Z_{1j}$ du module $M_1$ par la relation suivante :

$$\Delta P_1 = \sum_{j=1}^{N} \Delta P_{1j} \quad (6)$$

Les étapes E7 et E8 sont exécutées par le calculateur 3.

En cas de test E5 négatif ou non vérifié, il est déterminé que le module évalué est un module non défectueux fonctionnant correctement (étape E6).

En référence à la figure 3, chacun des modules $M_1$ et $M_2$ contient X=54 cellules et présente une surface A=1,314 m$^2$. Lors de la mesure thermographique (c'est-à-dire lors de la prise d'image thermique), les paramètres suivants ont été mesurés :

- irradiance G=684 W/m$^2$ ;
- température ambiante $T_\infty$ = 9,2°C ;
- température de référence de module photovoltaïque (correspondant à la température du module $M_2$) $T_{ref}$=30°C ;
- puissance électrique en sortie du module de référence (module $M_2$) P=131,7W (mesurée à l'aide d'un analyseur ou traceur I-V), ce qui correspond à une puissance normalisée, pour des conditions de test standards (c'est-à-dire une température ambiante de 25°C et une irradiance G de 1000W/m$^2$), égale à P'=205,4W .

A partir des paramètres mesurés, on calcule la valeur du coefficient d'échange thermique $U_{pv}$ par la relation (1) :

$$U_{pv} = \frac{G.A - P}{A.(T - T_\propto)} = \frac{684 \times 1,314 - 131,7}{1,314.(30 - 9,2)} = 28,07\ W.°C^{-1}.m^{-2}$$

Par ailleurs, à partir de l'image thermique $Im_1$ du module $M_1$, on détermine que la zone chaude $Z_{12}$ du module $M_1$ a une température $T_{12}$ égale à 54°C et une surface $s_{12}$=2,16 cellules. On en déduit la perte de puissance relative à la zone $Z_{12}$ du module $M_1$ par la relation :

$$\Delta P_{12} = U_{pv}.A_c.\left(T_{12} - T_{ref}\right).s_{12} = 28,07 \times \frac{1,314}{54} \times (54 - 30) \times 2,16 = 35,4W$$

La perte de puissance relative à la zone $Z_{11}$ étant nulle, on détermine ainsi que la perte estimée de puissance ou de production énergétique du module $M_1$, causée par le défaut thermique présent dans ce module, est égale à 35,4W. Cela correspond à un taux estimé de baisse de production ou de puissance énergétique de 17,96%.

Afin d'estimer la précision de la méthode d'estimation de perte de puissance du module $M_1$ de l'invention, on a mesuré la puissance électrique P1 en sortie du module $M_1$, à l'aide d'un traceur I-V, et obtenu une puissance $P_1$=112,2W, correspondant à une puissance normalisée $P_1'$=168,5W. Il en résulte une perte de puissance mesurée (réelle) par rapport au module de référence (ici $M_2$) égale à $\Delta P_1$ = 205,4 - 168,5 = 36,9W. Cela correspond à un taux réel de baisse de production énergétique de 17,23%. On constate que l'estimation de perte (17,96%) obtenue par la méthode de l'invention est très proche de la perte réelle (17,23%) mesurée à l'aide d'un traceur I-V. L'estimation de perte de puissance selon l'invention offre donc une très bonne précision.

Les figures 4 et 5 représentent respectivement les images $Im_3$ et $Im_4$ de deux modules photovoltaïques $M_3$ et $M_4$ de la centrale photovoltaïque. Chaque image $Im_3$ et $Im_4$ comporte une zone chaude $Z_{32}$ et $Z_{42}$.

On suppose ici que :

- le coefficient d'échange thermique des modules $M_3$ et $M_4$ est le même que celui du module $M_1$, à savoir $U_{pv}$ = 28,07 $W.°C^{-1}.m^{-2}$;
- la température de référence $T_{ref}$ d'un module photovoltaïque non défectueux est égale à 30°C.

La zone chaude $Z_{32}$ du module $M_3$ a une température $T_{32}$ égale à 70,6°C et une surface égale à 1 cellule. La zone de température $Z_{31}$ a une température d'environ 30°C. La perte estimée de puissance du module $M_3$ est égale à la perte estimée de puissance relative à la zone chaude $Z_{32}$ et est déterminée par la relation suivante :

$$\Delta P_3 = \Delta P_{31} + \Delta P_{32} = 0 + U_{pv}.A_c.\left(T_{32} - T_{ref}\right).s_{32}$$

$$= 28,07 \times \frac{1,314}{54} \times (70,6 - 30) \times 1 = 27,73W$$

La perte estimée de puissance est donc égale à 27,73W soit un taux de baisse de 16,9%. La perte réelle de puissance du module $M_3$ mesurée à l'aide d'un traceur I-V est égale à 32W , soit un taux de baisse de 19.39%.

La zone chaude $Z_{42}$ du module $M_4$ a une température $T_{42}$ égale à 44,3°C et une surface égale à 1 cellule. La zone de température $Z_{41}$ a une température d'environ 30°C. La perte estimée de puissance du module $M_4$ est égale à la perte estimée de puissance relative à la zone chaude $Z_{42}$ et est déterminée par la relation suivante :

$$\Delta P_4 = \Delta P_{41} + \Delta P_{42} = 0 + U_{pv}.A_c.\left(T_{42} - T_{ref}\right).s_{42}$$

$$= 28,07 \times \frac{1,314}{54} \times (44,3 - 30) \times 1 = 9.76W$$

La perte estimée de puissance est donc égale à 9.76W soit un taux de baisse de 6,1%. La perte réelle de puissance du module $M_4$ déterminée à partir de mesures réalisées à l'aide d'un traceur I-V est égale à 11W, soit un taux de baisse de 6,88%.

Notons que les exemples des figures 4 et 5 donnent des résultats d'estimation de perte de puissance moins précis que ceux de la figure 3 du fait que les hypothèses faites initialement relatives aux valeurs de $U_{pv}$ et de $T_{ref}$ sont moins précises.

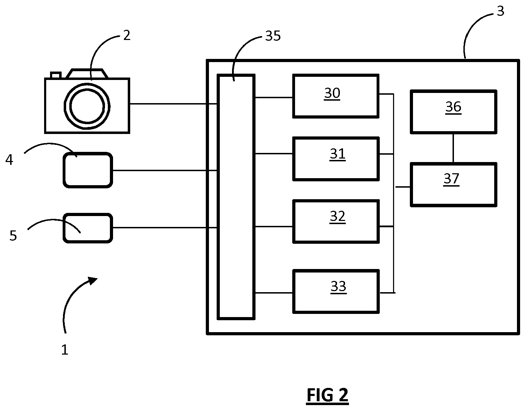

On va maintenant décrire, en référence à la figure 2, le calculateur 3 du système d'estimation 1, selon une forme de réalisation particulière. Le calculateur 3 comprend :

- un module de découpage ou de décomposition 30 d'une image thermique ;
- un module 31 de détermination des surfaces respectives des zones de température ;
- un module 32 d'obtention de la température de référence d'un module de référence ;
- un module 33 de détection d'au moins une zone chaude, parmi les N zones de température issues du découpage ;
- un module de calcul 34.

Le module de découpage 30 est adapté pour découper ou décomposer l'image thermique $Im_i$ d'un module photovoltaïque $M_i$ en N zones distinctes de température $Z_{ij}$ (avec $N \geq 1$) et pour déterminer la température propre à chaque zone $Z_{ij}$. Il est destiné à mettre en œuvre l'étape E2.

Le module 31 est adapté pour calculer les proportions respectives $Q_{ij}$ de chaque zone de température par traitement d'image de l'image thermique $Im_i$ du module photovoltaïque $M_i$ et les surfaces respectives correspondantes $s_{ij}$ (ici exprimées en nombre de cellules). Ce module 31 est destiné à mettre en œuvre l'étape E3.

Le module 32 est adapté ici pour déterminer la température de référence d'un module photovoltaïque de référence (non défectueux) en fonctionnement, ici à partir de l'image thermique de ce module. En variante, la température de référence pourrait être mesurée par une sonde thermique. Dans ce cas, la température est enregistrée dans une mémoire et obtenue par le module 32 par lecture dans la mémoire.

Le module de détection 33 est adapté pour détecter parmi les N zones de températures déterminées $Z_{ij}$ si l'une au moins de ces zones a une température supérieure à la température de référence $T_{ref}$ avec un écart de température supérieur à une valeur minimale $\Delta T_{min}$ (ici 2°C).

Le module de calcul 34 est destiné à calculer une estimation de perte de puissance ou de production énergétique du module, à l'aide des équations (2) et (6). Il est adapté pour mettre en œuvre l'étape E7 précédemment décrite.

Le calculateur comprend également une interface 35 de liaison avec le dispositif d'acquisition d'images thermiques et les capteurs 4 et 5, ainsi que des éléments d'interface utilisateur 36 (écran, clavier, interface graphique, etc.).

Le calculateur comprend encore un module central de commande 37, auquel les modules fonctionnels 30 à 34 sont connectés et destiné à contrôler le fonctionnement de ces modules 30 à 34.

Dans tout ce document, par le terme « surface », on entend parfois « aire ».

**Revendications**

1. Procédé d'estimation d'une perte de production énergétique d'un module photovoltaïque défectueux (Mi) appartenant à une centrale photovoltaïque, comprenant les étapes de :

   • acquisition (E1) d'une image thermique ($Im_i$) du module photovoltaïque défectueux ($M_i$) en fonctionnement ;
   • découpage (E2) de l'image thermique acquise en différentes zones de température ($Z_{ij}$) et détermination des températures respectives ($T_{ij}$) relatives aux différentes zones à partir de l'image thermique ($Im_i$) ;
   • obtention (E5) d'une température de référence ($T_{ref}$) d'un module photovoltaïque de référence ;
   • détection (E6), parmi lesdites zones de température, d'au moins une zone chaude dont la température est supérieure à la température de référence avec un écart de température supérieur ou égal à une valeur minimale prédéfinie ($\Delta T_{min}$) ;
   • calcul (E7) d'une estimation de la perte de production énergétique du module à partir de l'écart de température entre la température de la zone chaude et la température de référence, de la surface de la zone chaude et d'un coefficient d'échange thermique du module.

2. Procédé selon la revendication 1, **caractérisé en ce qu'**on calcule (E7) une estimation de la perte de production énergétique $\Delta P_{ij}$ relative à la zone chaude $Z_{ij}$ du module photovoltaïque défectueux $M_i$ par la relation suivante :

$$\Delta P_{ij} = U_{pv}.S_{ij}.\left(T_{ij} - T_{ref}\right)$$

où :

- $U_{pv}$ représente un coefficient d'échange thermique du module M$_i$ ;
- $S_{ij}$ représente la surface de la zone chaude Z$_{ij}$ ;
- $T_{ij}$ représente la température de la zone chaude Z$_{ij}$ ;
- $T_{ref}$ représente ladite température de référence.

**3.** Procédé selon la revendication précédente, **caractérisé en ce que**, dans le cas où le module photovoltaïque défectueux comprend plusieurs zones de température chaudes, on cumule les pertes estimées de production énergétique relatives aux différentes zones chaudes.

**4.** Procédé selon l'une des revendications précédentes, **caractérisé en ce que** ledit module photovoltaïque défectueux appartenant à une centrale photovoltaïque comportant une pluralité de modules photovoltaïques, la température de référence est relative à un module non défectueux en fonctionnement de la centrale.

**5.** Procédé selon l'une des revendications précédentes, **caractérisé en ce que** chacune des zones de température (Z$_{ij}$) de l'image thermique acquise (Im$_i$) est **caractérisée par** une température propre qui est uniforme ou quasi-uniforme sur toute la zone, deux zones de température adjacentes présentant entre elles un écart de température supérieur à un seuil prédéfini.

**6.** Procédé selon l'une des revendications précédentes, **caractérisé en ce qu'**il comprend une étape (E3, E4) de détermination de la surface de la zone chaude, à partir de l'image thermique dudit module.

**7.** Procédé selon l'une des revendications précédentes, **caractérisé en ce qu'**il comprend une étape préalable (E0) de détermination du coefficient d'échange thermique (U$_{pv}$) du module photovoltaïque défectueux (M$_1$) comprenant les sous-étapes suivantes, mises en œuvre sur un module photovoltaïque de référence (M$_2$) en fonctionnement :

• mesure (E01) de la puissance du flux lumineux irradiant le module de référence ;
• mesure (E02) de la puissance énergétique délivrée en sortie du module photovoltaïque de référence irradié ;
• mesure (E03) de la température ambiante ;
• mesure (E04) de la température du module photovoltaïque de référence ;
• détermination (E05) du coefficient d'échange thermique du module photovoltaïque de référence par la relation suivante :

$$U_{pv} = \frac{G.A - P}{A.(T - T_\propto)}$$

où :

- $U_{pv}$ représente le coefficient d'échange thermique du module photovoltaïque de référence ;
- $G$ représente la puissance du flux lumineux irradiant le module photovoltaïque de référence ;
- $A$ représente la surface du module photovoltaïque de référence ;
- $P$ représente la puissance énergétique délivrée par le module photovoltaïque de référence ;
- $T$ représente la température du module photovoltaïque de référence ;
- $T_\propto$ représente la température ambiante.

**8.** Procédé selon l'une des revendications précédentes, **caractérisé en ce que**, durant l'acquisition de l'image thermique du module photovoltaïque défectueux, la centrale photovoltaïque est en cours de fonctionnement.

**9.** Système d'estimation d'une perte de production énergétique d'un module photovoltaïque défectueux (Mi) appartenant à une centrale photovoltaïque, le système (1) comprenant des moyens (2, 3, 4, 5) de mettre en œuvre le procédé selon l'une des revendications 1 à 8.

**Patentansprüche**

**1.** Verfahren zur Schätzung eines Energieerzeugungsverlustes eines defekten Photovoltaikmoduls (M$_i$), das zu einem Photovoltaikkraftwerk gehört, umfassend die folgenden Schritte:

• Aufnehmen (E1) eines Wärmebildes (Im$_i$) des in Betrieb befindlichen Photovoltaikmoduls (M$_i$);
• Unterteilen (E2) des aufgenommenen Wärmebildes in verschiedene Temperaturzonen (Z$_{ij}$) und Bestimmen der jeweiligen Temperaturen (T$_{ij}$) für die verschiedenen Zonen anhand des Wärmebildes (Im$_i$);
• Erhalten (E5) einer Referenztemperatur (T$_{ref}$) eines Referenzphotovoltaikmoduls;
• Erkennen (E6) mindestens einer heißen Zone unter den Temperaturzonen, deren Temperatur über der Referenztemperatur liegt, mit einer Temperaturdifferenz, die größer als oder gleich einem vorgegebenen Mindestwert ($\Delta$T$_{min}$) ist;
• Berechnen (E7) einer Schätzung des Energieerzeugungsverlustes des Moduls anhand der Temperaturdifferenz zwischen der Temperatur der heißen Zone und der Referenztemperatur, der Fläche der heißen Zone und eines Wärmeaustauschkoeffizienten des Moduls.

2. Verfahren nach Anspruch 1, **dadurch gekennzeichnet, dass** man eine Schätzung des Energieerzeugungsverlustes $\Delta P_{ij}$ für die heiße Zone Z$_{ij}$ des defekten Photovoltaikmoduls M$_i$ mit der folgenden Gleichung berechnet (E7):

$$\Delta P_{ij} = U_{pv}.S_{ij}.\left(T_{ij} - T_{ref}\right)$$

worin:

- $U_{pv}$ für einen Wärmeaustauschkoeffizienten des Moduls M$_i$ steht;
- $S_{ij}$ für die Fläche der heißen Zone Z$_{ij}$ steht;
- $T_{ij}$ für die Temperatur der heißen Zone Z$_{ij}$ steht;
- $T_{ref}$ für die Referenztemperatur steht.

3. Verfahren nach dem vorhergehenden Anspruch, **dadurch gekennzeichnet, dass** man, wenn das defekte Photovoltaikmodul mehrere heiße Temperaturzonen umfasst, die geschätzten Energieerzeugungsverluste für die verschiedenen heißen Zonen zusammenrechnet.

4. Verfahren nach einem der vorhergehenden Ansprüche, **dadurch gekennzeichnet, dass** sich die Referenztemperatur, wenn das defekte Photovoltaikmodul zu einem Photovoltaikkraftwerk mit einer Vielzahl von Photovoltaikmodulen gehört, auf ein in Betrieb befindliches nicht defektes Modul des Kraftwerks bezieht.

5. Verfahren nach einem der vorhergehenden Ansprüche, **dadurch gekennzeichnet, dass** jede der Temperaturzonen (Z$_{ij}$) des aufgenommenen Wärmebildes (Im$_i$) durch eine eigene Temperatur gekennzeichnet ist, die gleichförmig oder nahezu gleichförmig über die gesamte Zone verteilt ist, wobei zwei benachbarte Temperaturzonen untereinander eine Temperaturdifferenz aufweisen, die über einem vorgegebenen Schwellenwert liegt.

6. Verfahren nach einem der vorhergehenden Ansprüche, **dadurch gekennzeichnet, dass** es einen Schritt (E3, E4) des Bestimmens der Fläche der heißen Zone anhand des Wärmebildes des Moduls umfasst.

7. Verfahren nach einem der vorhergehenden Ansprüche, **dadurch gekennzeichnet, dass** es einen vorherigen Schritt (E0) des Bestimmens des Wärmeaustauschkoeffizienten (U$_{pv}$) des defekten Photovoltaikmoduls (M$_1$) umfasst, der die folgenden Teilschritte umfasst, die an einem in Betrieb befindlichen Referenzphotovoltaikmodul (M$_2$) ausgeführt werden:

• Messen (E01) der Leistung des Lichtstroms, der das Referenzmodul bestrahlt;
• Messen (E02) der energetischen Leistung, die im Ausgang des bestrahlten Referenzphotovoltaikmoduls abgegeben wird;
• Messen (E03) der Umgebungstemperatur;
• Messen (E04) der Temperatur des Referenzphotovoltaikmoduls;
• Bestimmen (E05) des Wärmeaustauschkoeffizienten des Referenzphotovoltaikmoduls mit der folgenden Gleichung:

$$U_{pv} = \frac{G.A - P}{A.\left(T - T_\propto\right)}$$

worin:

- $U_{pv}$ für den Wärmeaustauschkoeffizienten des Referenzphotovoltaikmoduls steht;
- $G$ für die Leistung des Lichtstroms steht, der das Referenzphotovoltaikmodul bestrahlt;
- $A$ für die Fläche des Referenzphotovoltaikmoduls steht;
- $P$ für die vom Referenzphotovoltaikmodul abgegebene energetische Leistung steht;
- $T$ für die Temperatur des Referenzphotovoltaikmoduls steht;
- $T_\infty$ für die Umgebungstemperatur steht.

8.  Verfahren nach einem der vorhergehenden Ansprüche, **dadurch gekennzeichnet, dass** das Photovoltaikkraftwerk während des Aufnehmens des Wärmebildes des defekten Photovoltaikmoduls in Betrieb ist.

9.  System zur Schätzung eines Energieerzeugungsverlustes eines defekten Photovoltaikmoduls ($M_i$), das zu einem Photovoltaikkraftwerk gehört, wobei das System (1) Einrichtungen (2, 3, 4, 5) zur Durchführung des Verfahrens nach einem der Ansprüche 1 bis 8 umfasst.

**Claims**

1.  Method for estimating a loss of energetic production of a defective photovoltaic module ($M_i$) belonging to a photovoltaic plant, comprising the steps of:

    - acquiring (E1) a thermal image ($Im_i$) of the defective photovoltaic module (Mi) in operation;
    - dividing (E2) the acquired thermal image into various temperature zones ($Z_{ij}$) and determining respective temperatures ($T_{ij}$) relating to the various zones from the thermal image (Imi);
    - obtaining (E5) a reference temperature ($T_{ref}$) of a reference photovoltaic module;
    - detecting (E6), among said temperature zones, at least one hot zone the temperature of which is higher than the reference temperature with a temperature deviation greater than or equal to a predefined minimum value ($\Delta T_{min}$);
    - computing (E7) an estimate of the loss of energetic production of the module on the basis of the temperature deviation between the temperature of the hot zone and the reference temperature, of the area of the hot zone and of a heat exchange coefficient of the module.

2.  Method according to Claim 1, **characterized in that** an estimate of the loss of energetic production $\Delta P_{ij}$ relating to the hot zone $Z_{ij}$ of the defective photovoltaic module $M_i$ is computed (E7) using the following relationship:

$$\Delta P_{ij} = U_{pv}.S_{ij}.\left(T_{ij} - T_{ref}\right)$$

where:

- $U_{pv}$ is a heat exchange coefficient of the module $M_i$;
- $S_{ij}$ is the area of the hot zone $Z_{ij}$;
- $T_{ij}$ is the temperature of the hot zone $Z_{ij}$;
- $T_{ref}$ is said reference temperature.

3.  Method according to the preceding claim, **characterized in that**, in the case where the defective photovoltaic module comprises a plurality of hot temperature zones, the estimated losses of energetic production relating to the various hot zones are summed.

4.  Method according to one of the preceding claims, **characterized in that**, said defective photovoltaic module belonging to a photovoltaic plant comprising a plurality of photovoltaic modules, the reference temperature relates to a non-defective module in operation of the plant.

5.  Method according to one of the preceding claims, **characterized in that** each of the temperature zones ($Z_{ij}$) of the acquired thermal image ($Im_i$) is **characterized by** a specific temperature that is uniform or almost uniform over all the zone, two adjacent temperature zones having therebetween a temperature deviation greater than a predefined threshold.

6. Method according to one of the preceding claims, **characterized in that** it comprises a step (E3, E4) of determining the area of the hot zone, from the thermal image of said module.

7. Method according to one of the preceding claims, **characterized in that** it comprises a prior step (E0) of determining the heat exchange coefficient ($U_{pv}$) of the defective photovoltaic module ($M_1$) comprising the following substeps, which are implemented on a reference photovoltaic module ($M_2$) in operation:

   • measuring (E01) the power of the light flux irradiating the reference module;
   • measuring (E02) the energetic power delivered as output from the irradiated reference photovoltaic module;
   • measuring (E03) the ambient temperature;
   • measuring (E04) the temperature of the reference photovoltaic module;
   • determining (E05) the heat exchange coefficient of the reference photovoltaic module using the following relationship:

$$U_{pv} = \frac{G.A - P}{A.(T - T_\alpha)}$$

   where:

   - $U_{pv}$ is the heat exchange coefficient of the reference photovoltaic module;
   - $G$ is the power of the light flux irradiating the reference photovoltaic module;
   - $A$ is the area of the reference photovoltaic module;
   - $P$ is the energetic power delivered by the reference photovoltaic module;
   - $T$ is the temperature of the reference photovoltaic module;
   - $T_\alpha$ is the ambient temperature.

8. Method according to one of the preceding claims, **characterized in that**, during the acquisition of the thermal image of the defective photovoltaic module, the photovoltaic plant is in operation.

9. System for estimating a loss of energetic production of a defective photovoltaic module ($M_i$) belonging to a photovoltaic plant, the system (1) comprising means (2, 3, 4, 5) for implementing the method according to one of Claims 1 to 8.

**FIG 1A**

E0

E01 — MES $G$ (M$_{ref}$)

E02 — MES $P$ (M$_{ref}$)

E03 — MES $T_\propto$ (M$_{ref}$)

E04 — MES $T$ (M$_{ref}$)

E05 —
$$U_{pv} = \frac{G.A - P}{A.(T - T_\propto)}$$

E1 — Im$_1$

E2 — Im$_1$ → Z$_{11}$, Z$_{12}$

E3 — DET Q$_{11}$, Q$_{12}$ → Q$_{11}$.X, Q$_{12}$.X → s$_{11}$, s$_{12}$

E4 — MES T$_{ref}$

E5 — $\exists$ Z$_{1j}$ : T$_{1j} \geq$ T$_{ref}$ + $\Delta$T$_{min}$ ?

N — E6 — M$_1$ OK

Y — E7

E6

E7

$$\Delta P_{1j} = \begin{cases} U_{pv}.A_c.\left(T_{1j} - T_{ref}\right).s_{1i} & T_{1j} \geq T_{ref} + 2°C \\ 0 & T_{1j} \approx T_{ref} \end{cases}$$

E8

$$\Delta P_1 = \sum_{j=1}^{N} \Delta P_{1j}$$

**FIG 1B**

**FIG 2**

Z_{12}   M_1

Im_1

Im_2

Z_21   M_2

Z_11

**FIG 3**

Z_{32}   M_3

Im_3

Z_{31}

**FIG 4**

Z_{42}   M_4

Im_4

Z_{41}

**FIG 5**

## RÉFÉRENCES CITÉES DANS LA DESCRIPTION

**Documents brevets cités dans la description**

- US 20090238444 A